# EUROPEAN PATENT APPLICATION

(11) **EP 3 547 613 A1**
(43) Date of publication of application: **02.10.2019**
(21) Application number: 18305363.6
(22) Date of filing: 29.03.2018
(51) Int. Cl.: H04L 12/24, H04W 24/00, H04L 12/26

(54) **METHOD OF PERFORMANCE MONITORING AND CORRESPONDING APPARATUS**

(71) Applicant: InterDigital CE Patent Holdings, 75017 Paris (FR)
(72) Inventor: LE MERRER, ERWAN, 35576 CESSON SEVIGNE CEDEX (FR); LAMBERT, ANNE, 35576 CESSON SEVIGNE CEDEX (FR); SCHNITZLER, FRANCOIS, 35576 CESSON SEVIGNE CEDEX (FR); VIGOUROUX, JEAN-RONAN, 35576 CESSON SEVIGNE CEDEX (FR)
(74) Representative: Huchet, Anne

(57) **Abstract**

A first device, such as a wireless device, checks its own performance parameters with those of surrounding or neighboring other wireless devices within wireless communication reach of itself and of its neighboring devices and of the neighboring devices of its neighboring devices that are within wireless communication reach of each other. The first device therefore transmits a performance monitoring request to a discovered neighboring device. The neighboring device executes the performance monitoring and adds/aggregates the performance monitoring results to the request which it then transmits to another neighboring device that is discovered to be within reach. The request thus propagates through an ad hoc network of neighboring devices until a stop criterion is reached after which the aggregated results are transmitted to the first device for analysis. The first device may conclude from the analysis that its performance is comparable to the performance of its neighboring devices or not.

## Description

### FIELD

The present disclosure generally relates to the field of performance monitoring in Internet Protocol (IP) networks, and in particular in access points (APs).

### BACKGROUND

Any background information described herein is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

An access point, for example an Internet access point between a Wide Area Network (WAN) and a Local Area Network (LAN), can monitor incoming and outgoing traffic. It can monitor performance parameters that relate to the quality of service (QoS) provided to the devices in its LAN, such as packet loss, download/upload speed, and Wi-Fi performance. The access point can obtain average values of the monitored parameters over time, or per particular time slot, e.g. during nighttime or during office hours. It is therefore able to determine its 'normal' range of operation of the monitored performance parameters and can detect therefrom any performance degradations. However, the access point has no knowledge of performance parameter values that can be expected given its technical environment.

It is therefore desirable to provide a method and device for improved performance monitoring.

### SUMMARY

According to one aspect of the present disclosure, there is provided a method of performance monitoring. The method includes transmitting by a first device a request for measurement of performance parameters by another device discovered to be within wireless communication reach of the first device. The request is propagated from the another device to yet another device discovered to be within wireless communication reach of the yet another device. A request propagation chain is thus formed. The request propagation chain ends at a final device when a propagation stop criterion is reached. Each device in the request propagation chain either contributes to the aggregated result by adding its own measurement results to measurement results comprised in the request before propagating the request to another device in the propagation chain, or forwards the request without contributing to the aggregated result. When the propagation stop criterion is reached, the first device receives an aggregated result of the measurement from the final device in the propagation chain.

According to a further aspect of the method of performance monitoring, the request comprises the stop criterion.

According to a further aspect of the method of performance monitoring, the stop criterion is comprised of at least a propagation counter having an initial value set by the first device and the propagation counter being updated by each device in the propagation chain contributing to the aggregated result, the stop criterion being reached when the at least a propagation counter reaches a predefined value.

According to a further aspect of the method of performance monitoring, the stop criterion is comprised of at least a propagation time duration being set by the first device, the stop criterion being reached when the at least a propagation time duration is expired.

According to a further aspect of the method of performance monitoring, the devices in the propagation chain contributing to the aggregated result correspond to selection parameters comprised in the request, and devices in the propagation chain not contributing to the aggregated result do not correspond to selection parameters comprised in the request.

According to a further aspect of the method of performance monitoring, the method is implemented by an access point.

According to a further aspect of the method of performance monitoring, the request further comprises a unique request identifier generated by the first device.

According to a further aspect of the method of performance monitoring, each device in the propagation chain adds its own address to an ordered list of addresses of propagating devices to the request during propagation of the request.

The present principles also relate to a device for performance monitoring. The device includes a processor configured to transmit a request for measurement of performance parameters by another device discovered to be within wireless communication reach of the device. The request is propagated from the another device to yet another device discovered to be within wireless communication reach of the yet another device to form a request propagation chain ending at a final device when a propagation stop criterion is reached. Each device in the request propagation chain either contributes to the aggregated result by adding its own measurement results to measurement results comprised in the request before propagating the request to another device in the propagation chain, or forwards the request without contributing to the aggregated result. The processor is configured to receive, when the propagation stop criterion is reached, an aggregated result of the measurement from the final device in the propagation chain.

According to a further aspect of the device, the device is a wireless access point.

According to a further aspect of the device, the device is a Set Top Box.

According to a further aspect of the device, the device is a gateway.

According to a further aspect of the device, the device is a mobile communication device.

### BRIEF DESCRIPTION OF THE DRAWINGS

More advantages of the present disclosure will appear through the description of particular, non-restricting embodiments. To describe the way the advantages of the present disclosure can be obtained, particular descriptions of the present principles are rendered by reference to specific embodiments thereof which are illustrated in the appended drawings. The drawings depict exemplary embodiments of the disclosure and are therefore not to be considered as limiting its scope. The embodiments described can be combined to form particular advantageous embodiments. In the following figures, items with same reference numbers as items already described in a previous figure will not be described again to avoid unnecessary obscuring the disclosure. The embodiments will be described with reference to the following drawings in which:
**Figure 1** is a block diagram of a system including several access points.
**Figure 2** is a performance measurement graph representation of communications between the devices **11-14** in the system of figure 1.
**Figure 3** is a flow chart of an embodiment of the method of performance monitoring according to the present principles.
**Figure 4** is an embodiment of a device suitable for implementing the method per the principles of the present disclosure.

It should be understood that the drawings are for purposes of illustrating the concepts of the disclosure and are not necessarily the only possible configuration for illustrating the disclosure.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

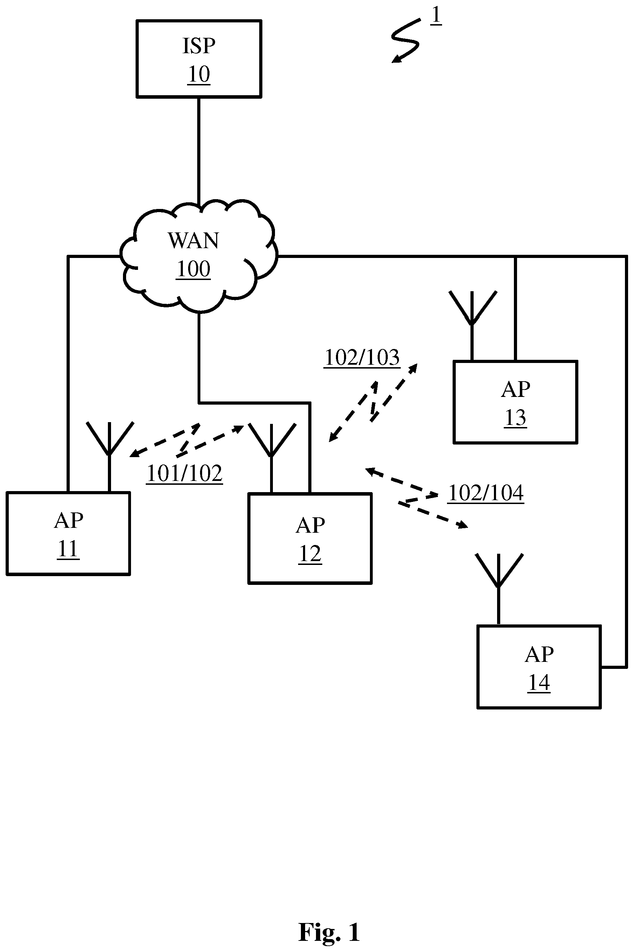

**Figure 1** is a block diagram of an environment wherein the present principles can be applied. The system **1** includes an Internet Service Provider (ISP) **10,** a WAN **100** and four access points **11-14.** Each of the access points (e.g., gateways) **11-14** provides a LAN for local network devices (not shown) such as mobile devices (e.g. Wi-Fi-equipped smartphones, tablets), Set Top Boxes (STBs) Digital Televisions (DTVs) and Internet telephony sets (e.g., according to DECT). These local network devices are connected to the LAN via wireless or wired communication interfaces (not shown). Access point **11** includes a wireless LAN (WLAN) **101;** access point **12** a WLAN **102,** access point **13** a WLAN **103** and access point **14** a WLAN **104.** The antennas and corresponding transceivers of access points **11** and **12** are within radio frequency (RF) reach of each other and access points **11** and **12** can potentially set up a data communication via their WLANs **101** and **102.** Likewise, the antennas and corresponding transceivers of access points **12** and **13** are within RF reach and can potentially communicate with each other over their WLANs **102** and **103.** Similarly, the antennas and corresponding transceivers of access points **12** and **14** are within RF reach of each other and can potentially set up a data communication via their WLANs **102** and **104.** Access points **11-14** may be located in same premises, for example in different wings of an office building, or in different premises, for example in different individual apartments. Other access points, not shown, may or may not be within RF reach of any of the access points **11-14.**

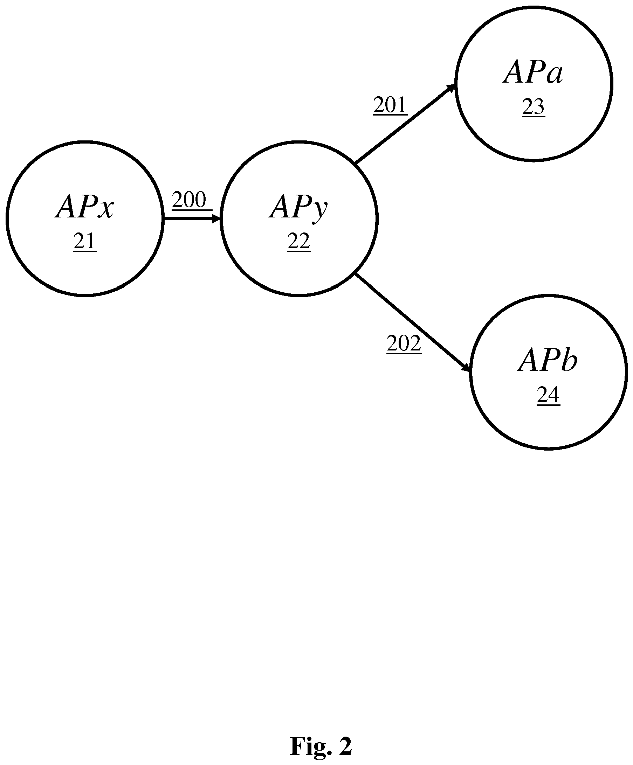

**Figure 2** is a performance measurement graph representation of communications between the devices **11-14** in the system **1.** Access point **11** is represented by device *APx* **21,** access point **12** by device *APy* **22,** access point **13** by device *APa* **23** and access point **14** by device *APb* **24.** To obtain representative results of performance measurements for the purpose of comparing the performance of a device with the performance of other, neighboring devices, it is preferable that data is retrieved from a sufficient number (representative sample) of neighboring devices. The present principles take advantage that some of the devices **21-24** are within radio frequency reach of each other's WLANs. This is for example the case in dense residential areas or office environments, where the wireless signals from different access points overlap. Devices **21-24** are set up to communicate in a point-to-point fashion via their wireless networks. Arrows **200-202** represent wireless communication links between devices **21-14** based on their WLANs. By exploring the graph, a device gains knowledge of the performance of other neighboring (at proximity, nearby, surrounding) devices and may compare its own performance with that of its neighbors and with the performance of the neighbors of its neighbors. The knowledge of the performance of neighboring devices constitutes a reference framework for a device's own performance parameter measurement and enables it to conclude if the own performance is similar to the performance of the neighboring devices, or if, to the contrary, the own performance is worse than the performance of the neighboring devices. If the compared performance is significantly worse, it can be concluded that the performance problem is due to local causes, such as device malfunctioning, bad connectors or wiring. Consequently, actions may be taken that include informing a remote failure management server of the performance degradation and/or requesting a user to verify the device's WLAN connections and wiring. If current performance is poor but compared performance is similar to that of the neighboring devices, it can be concluded that the performance problem is general to the neighboring devices. In that case, the remote failure server may be contacted by all or only some of the badly performing devices with a specific failure message that informs the remote failure server of the generalized failure; likewise, the user may be informed of the generalized failure. The present principles are therefore particularly interesting for ISPs as it enables autonomous failure detection and reduces the number of 'false' failure alarms, i.e., failures that are due to failure of local equipment, and it reduces the risk of overloading a remote failure management server with many failure messages when a great number of devices is impacted by a failure of a network equipment in the WAN. For users, it is particularly desirable to be better informed of the nature of a performance problem, i.e. local or general, in order to take appropriate actions, e.g., to engage other tasks or to wait until the generalized problem is resolved, or to verify/reset/replace own device and connections if the problem is local.

In the following, performance measurement is understood as measuring performance of a performance parameter or of a set of performance parameters. The performance parameters correspond for example to low-level parameters such as upload/download speed, bandwidth or throughput, number of packets with cyclic redundancy check (CRC) failures, number of lost packets; or higher-level performance parameters such as channel change time, streaming errors, number of video and/or audio decoding errors, number of connection failures, duration of transmission-reception lag. Performance parameters may be measured based on a measurement frequency for example one or several measurement sample(s) per second, per minute, per hour, per day, per week, per month or each year or any combination of these and may be grouped per time window e.g., per day, per month, per year. The monitoring per time window enables to discover patterns from which performance profiles may be established; for example, a daytime profile and a nighttime profile, because available bandwidth has a lower 'normal' value during office hours than a higher 'normal' value that can be observed outside office hours. For example, from a yearly pattern it may be observed that around new year transmission-reception lag is relatively high, the WAN being loaded due to the fact the network is used by many persons at a same time. From the patterns it can be concluded that such condition is not to be considered as being an 'abnormal' condition. Average, median and standard deviation can be computed for the monitored performance parameters. For example, a monitored performance parameter, e.g., upload speed, has a mean value of µ and a standard deviation of a. Individual monitored performance parameters may be combined in a monitored performance parameter; for example, performance parameters related to upload and download speed may be combined to constitute a data communication link health performance parameter. In the following, the term performance parameter is used indifferently for a single performance parameter or several parameters and can include a combination of several parameters. A device executing performance measurement can store the results locally, so that the results can be retrieved immediately when a performance management request is received.

Several modes of operation for propagation (transmission) of performance measurement requests (referred to generally as 'request' or 'requests' hereinafter) in a network of neighboring devices, measuring and propagation of results and return to the originating device will be described in the following.

It is considered that a performance measurement graph is constructed ad hoc (on-the-fly') when a request is propagated from neighboring device to neighboring device. The propagation path of a request is thus constructed on-the-fly, as the neighboring devices discover other neighboring devices. The propagation ends when a stop criterion is reached and/or when no more neighboring devices are discovered, and the performance measurements results ('results' or 'request results') are sent to the device at the origin of the request. The ad hoc construction of the request propagation path advantageously allows to cope with the vagaries of the availability of the neighboring devices and the wireless networks provided by them. For example, wireless networks of neighboring devices may become unavailable because devices may shut down their wireless network temporarily, e.g., during nighttime, or because of devices moving physically - and the wireless network offered by a moving device may then be moved from one set of neighboring devices to another set of neighboring devices.

According to a particular embodiment, a request for performance measurement, formulated by a first device, referred to as 'originating device', is propagated through an ad hoc network of neighboring access points, each device aggregating its own performance measurements to the results received before transmitting the performance request and aggregated results to the next device in the ad hoc network. This mode of operation enables each participating device to benefit from the performance measurements results of other participating devices. To avoid that a device participates multiple times to a same performance request, the request may include a unique identifier (UID), for example, a unique request identifier created by the originating device and included in the request, for example the IP or MAC address of the originating device combined with a value of a request counter managed by the originating device and increased at each request issued by the originating device. Alternatively, the unique request identifier is a hash computed over the request. Any device receiving a request can verify if the request UID corresponds to an UID of a request that was already handled and if not so, handle the request, while if not so, not handle the request again.

According to a particular embodiment, only selected neighboring devices are included in the performance measurement. A request may therefore include information related to selection features indicating which type of device is targeted for propagation of the request. An example of selection features for performance parameter measurement is WAN access type, e.g. ADSL1 or ADSL2, Fiber, or Cable modem (e.g., Data Over Cable Service Interface Specification (DOCSIS) 3.0 or 3.1); or access point manufacturer and/or type. A device receiving a request that does not correspond to the selection features may forward the request to other neighboring devices without however participating in (contributing to) the performance measurement result. This kind of device is further referred to as a forwarding device. If, however the device corresponds to the selection features, it can handle the request as a participating device before propagating the request to a next neighboring device.

According to a particular embodiment, the aforementioned stop criterion is for example a propagation counter present in the request, being set to an initial value (e.g., 10, 15, 25, 50, 100 or 1000) by the originating device and being decreased by each device handling (participating in) the request until a stop value (e.g., zero or one) is reached. Such a propagation counter then represents a maximum number of network participating devices. According to a particular embodiment, forwarding devices do not decrease the propagation counter. Additionally, the propagation of the request stops when the propagation counter has not yet reached its stop value, but the request cannot be propagated further because there are no more neighboring devices. According to a particular embodiment, the stop criterion is a time-out present in the request, set at an initial value ('set value') (e.g., current time plus 5, 10, 25, 50, 100 or 1000s) by the originating device. The request may be propagated until the stop value (e.g., current time >= set value) is reached. Such a propagation counter then represents a maximum validity duration of the request.

According to a particular embodiment, the above stop criteria are joined to form a combined stop criterion, i.e. the request propagation is stopped when at least one of the above stop criteria is reached.

According to a particular embodiment, the propagation counter initial value is included in the request so that each participating device can establish, from the difference between the initial value of the propagation counter and its current value, how many devices already participated (contributed) to the results it received. This may be used for computing averages for example.

When the stop criterion is reached, the final result, i.e. the aggregated performance measurement of all devices on the propagation path of the request, is sent back to the originating device. Several possibilities exist to return the result to the originating device.

According to a particular embodiment, if the request includes the IP or MAC address of the originating device, such as for example included in the request UID as described earlier, the device returning the result may transmit the result to the originating device via its own connection to the WAN, using the IP or MAC address of the originating device.

Alternatively, the request includes the (IP) address of a device, e.g. of a server on the WAN, where the results are to be transmitted to, the originating device being able to retrieve the results from the server via its own connection to the WAN.

Alternatively, the request result may backward traverse the propagation path to reach the originating device. In order to allow this backward traversal, and according to a particular embodiment, each device participating/forwarding in a request adds (concatenates) its own UID to the request and an (ordered) list of UIDs ('UID list') of participating devices is included in the request when it propagates. Then each device receiving a request can trace back the issuer device of the request and can return the result to that device. This UID is preferably an IP address. However, this solution requires that the graph of neighboring devices remains stable at least during propagation and backward traversal, which may not be the case when devices in the propagation graph are moving or have been switched off.

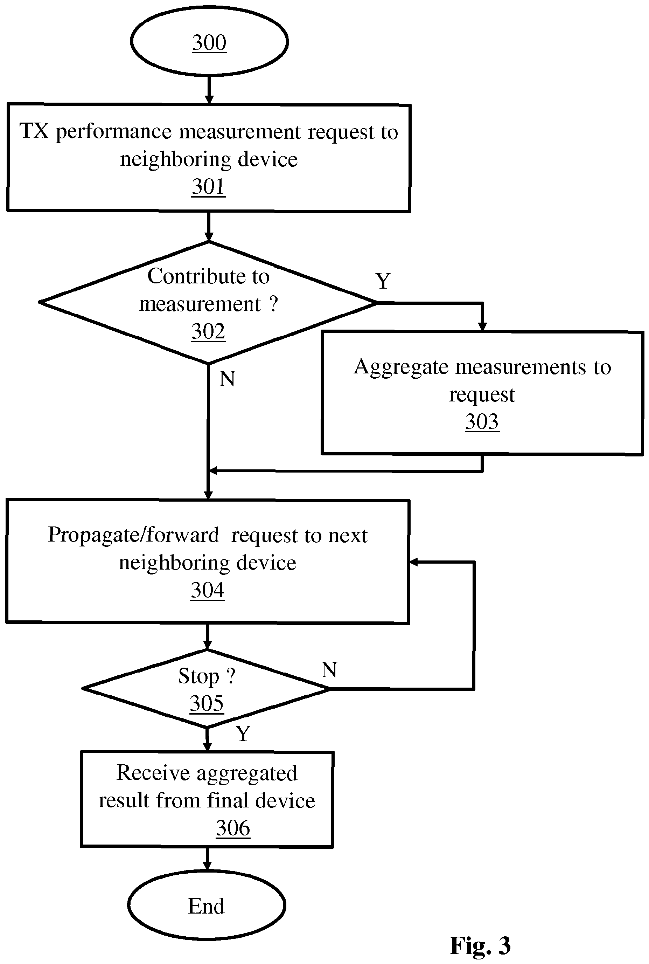

**Figure 3** is a flow chart of an embodiment of the method **300** of performance monitoring according to the present principles. In a first step **301,** a first device (e.g., **11** or **21**) transmits a performance measurement request for measurement of at least one performance parameter to a neighboring device (e.g., **12** or **22**) that is discovered to be within wireless communication reach of the first device. In a step **302,** the neighboring device (e.g., **12** or **22**) decides whether it contributes or not to the performance measurement. If it contributes, it will perform the its own measurement(s) or retrieve its own measurements results from own measurements results already stored in memory, and aggregate (add), step **303,** its own results with performance measurement results present in the received request. In a step **304,** the request is propagated (in case of contribution) or forwarded (in case of non-contribution) to the next neighboring device, that is, the next device (e.g., **13, 14, 23** or **24**) in the request propagation chain that is discovered to be within wireless communication reach of the device (e.g., **12** or **22**) having received the request. The request is thus propagated from device to device to form a propagation chain, each device in the request propagation chain either contributing, step **303,** to the aggregated result in the request by adding its own measurement results to measurement results in the request before propagating, step **304,** the request to another device in the propagation chain, or forwarding (step **304**) the request without contributing to the aggregated result. The propagation ends when a stop criterion is reached in step **305** by a final device in the propagation chain. When the stop criterion is reached, the aggregated result is addressed to the first device and received by the first device in step **306.**

The first device may then compare its own performance measurement results with the performance measurement result received from the final device in the propagation chain, and may determine if degradation is observed for one or more monitored performance parameters. For example, the 'normal' range for a monitored performance parameter or of a combination of monitored performance parameters is µ±σ. A value of a monitored performance parameter or of a set of monitored performance parameters between µ±σ and µ±3σ can be considered to represent a medium level of performance degradation. A value lower than µ±3σ can be considered to represent a serious (important) performance degradation. The performance degradation may also be weighed by a weighing factor that is dependent on the duration and reoccurrence over time of a performance degradation. For example, a serious performance degradation occurring only once per year during some seconds does not have as much weight on an overall performance degradation as the a serious performance degradation occurring daily during some hours. A performance degradation of one or more performance parameters may also be weighed against a performance degradation of one or more other performance parameters. For example, a performance parameter measuring packet loss may have a lower weight factor than a performance parameter measuring video decoding errors. Performance parameter measurements may be combined to form different usage profiles, for example a streaming profile or a file upload profile. Thresholds may be used to distinguish between the gravity (seriousness, importance) of the performance degradation.

If a performance degradation is observed for a performance parameter or for a combination of performance parameters or for a performance profile and/or the performance degradation is above a threshold (e.g., between µ±σ and µ±3σ), actions may be taken.

The discovery of neighboring devices is done, for example using the Bonjour zero-configuration networking ("zeroconf") protocol of Apple Inc., the Internet Engineering Task Force (IETF) Zeroconf protocol, or the Wi-Fi discovery protocol.

The decision for a device receiving a request to contribute or not may be based on selection parameters included in the request. These selection parameters may comprise technical characteristics of the first device such as type of network connection to the WAN, manufacturer or model type, or ISP identification. The request is destined to traverse a graph of neighboring devices, see the example graph of figure 2, in a point-to-point manner via the wireless networks of the neighboring devices. This request may be related to a single performance parameter or to a set of performance parameters. The request may therefore include a list of performance parameters for which performance results are to be retrieved.

When the request is received and executed by a device and the stop criterion is reached, the propagation of the request ends. For example, when the request originating from AP **11** (or APx **21**) has been transmitted by AP **12** (or APy **22**) to be received by AP **13** (or APa **23**) and AP **14** (or APb **24**), the propagation counter is decreased twice and reaches a minimum value of zero. This ends the request propagation and the request results are sent to the originating device, e.g., AP **11** or APx **21.** The originating device receiving the aggregated results may compare the results with its own performance parameters. The originating device can conclude from the comparison the problem nature and an action to take; for example, if the problem is of nature X, the action is Y; if the problem is of nature W, the action is Z. For example, the problem is of a general nature, the first device reports the problem to its ISP and the user is informed that no action is required on his/her side; if however the problem is an individual problem, the user is informed that his device needs to be changed/reset, and/or that he should check the wiring of his device, move the device to another place for better Wi-Fi coverage.

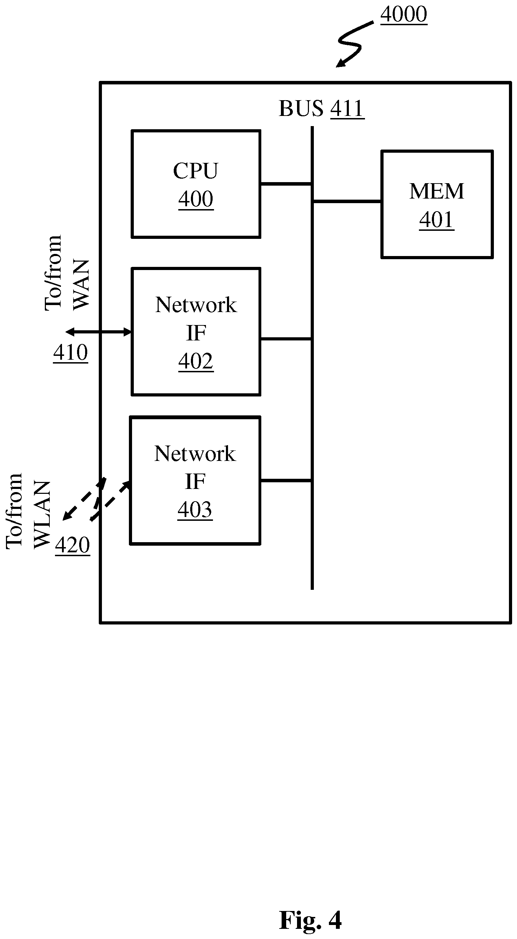

**Figure 4** is an embodiment of a device suitable for implementing the method per the principles of the present disclosure. The device **4000** is for example access point device AP **11** of figure 1. The device includes a processor or central processing unit **400,** a memory **401,** a first network interface **402** for connection to a WAN via a connection **410,** and a second network interface **403** for connection **420** to a WLAN. The elements **400-403** are interconnected via an internal data communication bus **411.** Memory **401** is configured to store machine readable instructions which are executable for processor **400.** Processor **400** transmits (**301**), via WLAN network interface **403,** a request for measurement of performance parameters by another device (**12, 22**) discovered to be within wireless communication reach of the device, the request being propagated from the another device (**12, 22**) to yet another device (**13, 14, 23, 24**) discovered to be within wireless communication reach of the yet another device to form a request propagation chain ending at a final device when a propagation stop criterion is reached. Each device in the request propagation chain either contributes (**303**) to the aggregated result by adding its own measurement results to measurement results comprised in the request before propagating (**304**) the request to another device in the propagation chain, or forwards (**304**) the request without contributing to the aggregated result. Processor **400** receives via its WAN network interface **410** or via its WLAN network interface **420,** when said propagation stop criterion (**305**) is reached, an aggregated result of the measurement by all the devices in the propagation chain that contributed to the aggregated result, from the final device in said propagation chain. Then, processor **400** may compare the result received with its own performance measurement as for example stored in memory **401** and conclude if its own measurements are similar to or different from those received and may take actions as a function of the result of the comparing.

It is to be appreciated that some elements in the drawings may not be used or be necessary in all embodiments. Some operations may be executed in parallel. Embodiments other than those illustrated and/or described are possible. For example, a device implementing the present principles may include a mix of hard- and software.

It is to be appreciated that aspects of the principles of the present disclosure can be embodied as a system, method or computer readable medium. Accordingly, aspects of the principles of the present disclosure can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the principles of the present disclosure can take the form of a computer readable storage medium. Any combination of one or more computer readable storage medium(s) can be utilized.

Thus, for example, it is to be appreciated that the diagrams presented herein represent conceptual views of illustrative system components and/or circuitry embodying the principles of the present disclosure. Similarly, it is to be appreciated that any flow charts, flow diagrams, state transition diagrams, pseudo code, and the like represent various processes which may be substantially represented in computer readable storage media and so executed by a computer or processor, whether such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. Some or all aspects of the storage medium may be remotely located (e.g., in the 'cloud'). It is to be appreciated that the following, while providing more specific examples of computer readable storage mediums to which the present principles can be applied, is merely an illustrative and not exhaustive listing, as is readily appreciated by one of ordinary skill in the art: a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

## Claims

1. A method of performance monitoring, comprising:
transmitting (301), by a first device (11, 21), a request for measurement of performance parameters by another device (12, 22) discovered to be within wireless communication reach of said first device, said request being propagated from said another device (12, 22) to yet another device (13, 14, 23, 24) discovered to be within wireless communication reach of said yet another device to form a request propagation chain ending at a final device when a propagation stop criterion is reached, each device in the request propagation chain either contributing (303) to said aggregated result by adding its own measurement results to measurement results comprised in the request before propagating (304) the request to another device in the propagation chain, or forwarding (304) the request without contributing to the aggregated result; and
when said propagation stop criterion (305) is reached, receiving (306), by said first device, an aggregated result of said measurement from said final device in said propagation chain.

2. The method according to claim 1, wherein said request comprises said stop criterion.

3. The method according to claim 2, wherein said stop criterion is comprised of at least a propagation counter having an initial value set by the first device and said propagation counter being updated by each device in the propagation chain contributing to the aggregated result, said stop criterion being reached when said at least a propagation counter reaches a predefined value.

4. The method according to claim 2 or 3 wherein said stop criterion is comprised of at least a propagation time duration being set by the first device, said stop criterion being reached when said at least a propagation time duration is expired.

5. The method according to any of claims 1 to 4, wherein devices in the propagation chain contributing to the aggregated result correspond to selection parameters comprised in said request, and devices in the propagation chain not contributing to the aggregated result do not correspond to selection parameters comprised in said request.

6. The method according to any of claims 1 to 5, wherein the request further comprises a unique request identifier generated by the first device.

7. The method according to any of claims 1 to 6, wherein each device in said propagation chain adds its own address to an ordered list of addresses of propagating devices to the request during propagation of the request.

8. A device (4000) for performance monitoring, the device comprising a processor (400) configured to:
transmit (301) a request for measurement of performance parameters by another device (12, 22) discovered to be within wireless communication reach of said device, said request being propagated from said another device (12, 22) to yet another device (13, 14, 23, 24) discovered to be within wireless communication reach of said yet another device to form a request propagation chain ending at a final device when a propagation stop criterion is reached, each device in the request propagation chain either contributing (303) to said aggregated result by adding its own measurement results to measurement results comprised in the request before propagating (304) the request to another device in the propagation chain, or forwarding (304) the request without contributing to the aggregated result; and
receive, when said propagation stop criterion (305) is reached, an aggregated result of said measurement from said final device in said propagation chain.

9. The device according to claim 8, wherein the device is a wireless access point.

10. The device according to 8, wherein the device is a Set Top Box.

11. The device according to claim 8, wherein the device is a gateway.

12. The device according to claim 8, wherein the device is a mobile communication device.
